(19) Europäisches Patentamt
European Patent Office
Office européen des brevets

(11) **EP 2 265 676 B1**

(12) **EUROPÄISCHE PATENTSCHRIFT**

(45) Veröffentlichungstag und Bekanntmachung des Hinweises auf die Patenterteilung:
**31.10.2018 Patentblatt 2018/44**

(21) Anmeldenummer: **09731546.9**

(22) Anmeldetag: **20.04.2009**

(51) Int Cl.:
*C09C 3/08* (2006.01)          *C09C 3/12* (2006.01)
*C08K 9/04* (2006.01)          *C08K 9/06* (2006.01)

(86) Internationale Anmeldenummer:
**PCT/EP2009/002854**

(87) Internationale Veröffentlichungsnummer:
**WO 2009/127433 (22.10.2009 Gazette 2009/43)**

(54) **ANORGANISCHE NANOPARTIKEL UND DAMIT HERGESTELLTE POLYMERKOMPOSITE**

INORGANIC NANOPARTICLES AND POLYMER COMPOSITE PRODUCED THEREFROM

NANOPARTICULES INORGANIQUES ET COMPOSITES POLYMÈRES PRÉPARÉS À PARTIR DE CES NANOPARTICULES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **18.04.2008 EP 08007582**

(43) Veröffentlichungstag der Anmeldung:
**29.12.2010 Patentblatt 2010/52**

(73) Patentinhaber: **Evonik Degussa GmbH**
**45128 Essen (DE)**

(72) Erfinder:
• **LANGERBEINS, Klaus**
**21502 Geesthacht (DE)**
• **KÜHNER, Uwe, Dietrich**
**20457 Hamburg (DE)**
• **SIOL, Werner**
**64297 Darmstadt (DE)**

(56) Entgegenhaltungen:
**DE-A1- 10 100 633**

**Beschreibung**

Die Erfindung betrifft anorganische Nanopartikel, insbesondere Nanopartikel auf Basis von Metall- und Halbmetalloxiden, insbesondere der Oxide von Silicium, Titan, Zirkonium, Cer, Yttrium, Aluminium, Zink, Antimon und deren Mischungen, mit radikalisch polymerisierbaren Gruppen auf der Partikeloberfläche, diese Nanopartikel enthaltende Dispersionen und die aus diesen Partikeldispersionen hergestellten Polymerkomposite.

Anorganische Nanopartikel mit polymerisierbaren Gruppen auf der Oberfläche sind bekannt, so z.B. aus Kratzfestbeschichtungen auf Basis von mit Vinylgruppen modifizierten $SiO_2$-Partikeln in Dipropylenglykoldiacrylat als Dispersionsmedium (DE 69826226).

DE 10100633 beschreibt anorganische Metall- und Halbmetalloxide mit durch siliciumorganische Verbindungen auf der Oberfläche fixierten Gruppen vom Typ Allyl oder Vinyl.

Fadel (Dissertation 2004 Darmstadt) nutzt den Stöber- Prozess zur Synthese von methacryloxypropyl-modifizierten $TiO_2$-Partikeln und synthetisiert damit $TiO_2$ / Polybutylacrylat-Schlagzähmodifier. Peyrelasse et al. (Langmuir, 22, 6683 (2006)) untersuchen das rheologische Verhalten von Polybutylacrylat, gefüllt mit Stöber-$SiO_2$- gepfropften Polybutylacrylatketten.

Netzwerke auf der Basis von methacryloxypropyl- gepfropften $SiO_2$- Nanopartikeln und Methylmethacrylat werden von Mauger et al. beschrieben (Polym Int 53: 378(2004)).

DE 199 25 331 offenbart mit Nanopartikeln modifizierte Bindemittel, die durch Umsetzung von carboxylfunktionellen Nanopartikeln mit epoxyfunktionellen Bindemitteln hergestellt werden. Durch diese Umsetzung soll eine besonders gute Verteilung der Nanopartikel in der Matrix erreicht werden und die häufig beobachteten Verträglichkeitsprobleme in Nanopartikel enthaltenden Systemen beseitigt werden.

In DE 102 59460 werden mit Azoinitiatoren modifizierte Nanopartikel beschrieben, mit denen eine gute Einarbeitung der Nanopartikel erreicht wird.

Nanopartikel verbessern in einer Vielzahl von Anwendungen die Eigenschaften von Werkstoffen. Nanocomposite können u.a. die Kratz- und Abriebbeständigkeit (Tribologie), die mechanischen Eigenschaften (Zugfestigkeit, Modul, Schlagzähigkeit), Barriereeigenschaften (Gasbarriere), das Brandverhalten, Fließeigenschaften (Rheologie) und elektrische Eigenschaften verbessern. Durch hochbrechende Nanopartikel kann der Brechungsindex von Kunststoffen erhöht werden.

Der Erfindung liegt die Aufgabe zugrunde, Nanopartikel mit radikalisch polymerisierbaren Gruppen bereitzustellen, die sich einfach herstellen lassen und eine gute Verknüpfung von anorganischen Nanopartikeln und damit gepfropften organischen Polymerisaten ermöglichen. Ziel ist dabei insbesondere eine effektive Verbindung von anorganischen Nanopartikeln und organischen Polymeren durch einfache radikalische Polymerisation.

Die Erfindung löst diese Aufgabe durch Metall- oder Halbmetalloxidnanopartikel mit einer mittleren Teilchengröße als Median D50 von 2 bis 250 nm, gemessen mittels dynamischer Lichtstreuung auf einem Partikelanalysator LB-550 bei einer Konzentration von maximal 10 Gew.-% Partikeln, wobei die Dispersion maximal eine dynamische Viskosität von 3 mPas bei 25°C aufweist, wobei diese Nanopartikel auf der Oberfläche wenigstens zwei verschiedenartige, radikalisch polymerisierbare Gruppen aufweisen, wobei

die wenigstens 2 verschiedenartigen, radikalisch polymerisierbaren Gruppen ausgewählt sind aus Methacryl-, Acryl-, Styryl- oder Itaconylgruppen einerseits und Vinyl-, Allyl-, Alkenyl- oder Crotonylgruppen andererseits.

Erfindungsgemäß bevorzugt sind Nanopartikel aus der Gruppe bestehend aus Halbmetall- und Metalloxiden der 3. und 4. Hauptgruppe, Übergangsmetalloxiden, Oxiden der Lanthanoiden und Actinoiden sowie deren Mischungen und Core-Shell-Partikel mit Kern oder Hülle auf Basis dieser Oxide. Beispielhaft zu nennen sind die Oxide des Silcium, Titan, Zirkonium, Cer, Yttrium, Aluminium und Antimon. Für verschiedene Anwendungen kann jedoch der Einsatz anderer Metall- oder Halbmetalloxide von Bedeutung sein. In diesem Fall sind auch Nanopartikel mit einem Kern-Schale-Aufbau von Interesse, wie sie in DE 10100633 beschrieben werden. Besonders bevorzugt sind Nanopartikel auf Basis von $SiO_2$.

Die $SiO_2$-Partikel bestehen vorzugsweise zu wenigstens 50 % aus vereinzelten, nicht aggregierten oder agglomerierten Primärpartikeln. Weitere bevorzugte Untergrenzen sind 70 %, 80 %, 90 %, 95 % und 98 %. Bei diesen Prozentangaben handelt es sich um Gew.-%. Gemäß diesem Aspekt der Erfindung ist es somit möglich, eine Dispersion zur Verfügung zu stellen, die im Wesentlichen frei ist von Aggregaten und/oder Agglomeraten der $SiO_2$-Partikel. Dies verbessert die Verarbeitbarkeit (geringere Viskosität) und die mechanischen Eigenschaften von damit hergestellten Zwischen- und

Endprodukten. Im Stand der Technik bekannte pyrogene Kieselsäuren weisen eine durch den Herstellungsweg (Flammenpyrolyse) bedingte Aggregation/Agglomeration der Primärpartikel zu größeren Gebilden auf, die die Verarbeitbarkeit von damit hergestellten Zwischen- und Endprodukten erschwert.

Die mittlere Größe der Nanopartikel liegt im Bereich 2 bis 250 nm. Bevorzugte Untergrenzen für die Partikelgröße sind 4 nm, 5 nm und 8 nm. Bevorzugte Obergrenzen sind 150 nm, 50 nm und 30 nm. Die genannten Ober- und Untergrenzen sind beliebig zu erfindungsgemäßen Bereichen kombinierbar.

Die Bestimmung der Teilchengröße kann in Lösung mittels dynamischer Lichtstreuung auf einem "Dynamic Light Scattering Particle Size Analyzer LB-550" der Firma Horiba bei einer Konzentration von maximal 10 Gew.-% Partikeln erfolgen, wobei die Dispersion maximal eine dynamische Viskosität von 3 mPas bei 25 °C aufweisen darf. Als Teilchengröße wird der Median (D50-Wert) der Partikelgrößenverteilung angeben.

Im Feststoff kann die Teilchengröße per Transmissionselektronenmikroskopie bestimmt werden. Dazu werden mindestens 100 Partikel ausgemessen und eine Partikelgrößenverteilung gebildet. Die beiden verschiedenen radikalisch polymerisierbaren Gruppen (nachfolgend als A- und B-Gruppen bezeichnet) könnenso ausgewählt sein, dass sie nicht beide untereinander alternierende Copolymere aufbauen. Demgemäß sollen nicht beide Copolymerisationsparameter

$$r_A \; = \; k_{AA}/k_{AB}$$

$$r_B \; = \; k_{BB}/k_{BA}$$

kleiner als 0,5 sein, bzw.sind nicht beide Copolymerisationsparameter kleiner als 1.

Für das Copolymerisationsverhalten eines Monomeren M1 (z.B. das Monomer in dem die Partikel dispergiert sind) mit den reaktiven Gruppen auf den Partikeln (jeweils Monomer 2) gelten folgende Regeln:

Für die Copolymerisation von M1 mit A gilt:

$$r1 \; < \; 0,8 \; (bevorzugt \; < \; 0,5)$$

$$r2 \; > \; 0,9 \; (bevorzugt \; > \; 1,5).$$

Für die Copolymerisation von M1 mit B gilt:

$$r1 \; > \; 1,0 \; (bevorzugt \; > \; 3)$$

$$r2 \; < \; 0,5 \; (bevorzugt \; < \; 0,3).$$

Von den reaktiven Gruppen auf der Oberfläche können nur schwer die r-Parameter gemessen werden. Deshalb werden die r-Parameter des nächstliegenden niedermolekularen Verbindungen heran gezogen. Dabei werden die Gruppen nach folgendem Schema eingeteilt:

| Gruppe: | Referenz: |
|---|---|
| Acrylo | Methylacrylat |
| Methacrylo | Methylmethacrylat |
| Itaconyl | Itaconsäure |
| Crotonyl | Crotonsäuremethylester |
| Vinyl | Vinylacetat |
| Allyl, Alkenyl | Allylacetat |
| Styryl | Styrol |

Gruppen, die hier nicht aufgezählt sind, werden als Fragment bis zum ersten Metallatom bewertet, indem das Metallatom durch ein Wasserstoffatom ersetzt wird. Ein Acrylamidopropylsilan wird als N-Propylacrylamid bewertet. Salze wie Ölsäuresalze (z.B. auf basischen Aluminiumoxidoberflächen), Vinylpyridin (auf sauren Oberflächen) werden wie das freie Monomer bewertet. Polymere mit reaktiven Seitenketten werden wie die jeweilige Seitenkettengruppe alleine bewertet (z.B. Polyallylmethacrylat wie Allylacetat).

Gemäß der Erfindung weisen die erfindungsgemäßen Nanopartikel auf der Oberfläche Methacryl-, Acryl-, Styryl- und/oder Itaconylgruppen (A-Gruppen) einerseits und Vinyl-, Allyl-, Alkenyl- und/oder Crotonylgruppen (B-Gruppen) andererseits auf.

Bevorzugt beträgt die Konzentration jeder dieser Gruppen auf der Oberfläche der Nanopartikel 0,01 bis 10 Gruppen pro $nm^2$, vorzugsweise 0,1 bis 4 Gruppen pro $nm^2$, weiter vorzugsweise 0,1 bis 1 Gruppen pro $nm^2$.

Über die polymerisierbaren Gruppen hinaus können die Partikel auch Gruppen tragen, die nicht in einer Polymerisation reagieren.

Die Oberfläche der Partikel kann für sphärische Partikel aus der Teilchengröße berechnet werden. Für die Berechnung wird der Median der Partikelgrößenverteilung (D50) heran gezogen. Die spezifische Oberfläche ($A_0$) lässt sich dann mit Hilfe der Dichte des Partikels (p) berechnen:

$$A_0 \; = \; 6 \; / \; (\rho \; x \; D50)$$

Die Dichte von kolloidalem Siliziumdioxid beträgt 2,1 $g/cm^3$.

Die Zahl der reaktiven Gruppen pro Oberflächeneinheit ($n_R{}^A$) ergibt sich aus dem Quotienten der Zahl reaktiver Gruppen ($n_R{}^M$) pro Masse dividiert durch die spezifische Oberfläche:

$$n_R \; = \; (n_R{}^M \; / \; A_0)$$

Die Zahl reaktiver Gruppen pro Masse $n_R{}^M$ kann über geeignete analytische Methoden bestimmt werden. Werden Silane des Typs Alkoxy, Acyloxy, Acetoxy, Alkenoxy oder Oximosilane eingesetzt, um die reaktiven Gruppen auf die Oberfläche zu bringen, kann von einer vollständigen Hydrolyse des Silans ausgegangen werden. D.h. alle eingesetzten Gruppen finden sich auf der Oberfläche der Partikel wieder.

Die Bestimmung der Anzahl der polymerisationsfähigen Gruppen auf der Partikeloberfläche kann auch durch NMR Spektroskopie oder mittels DSC (differential scanning calorimetry) erfolgen. Diese Verfahren können insbesondere dann zur Anwendung kommen, wenn geeignete analytische Methoden zur Bestimmung reaktiver Gruppen (bspw. Iodzahlbestimmung bei Vinylgruppen) nicht zur Verfügung stehen. Bei der DSC wird die Polymerisationswärme als Maß für die Zahl der polymerisationsfähigen Gruppen auf der Partikeloberfläche gemessen. Bei dieser DSC Bestimmung wird eine definierte Menge der oberflächenmodifizierten $SiO_2$ Partikel mit einer standardisierten Peroxidlösung versetzt und die Reaktionswärme gemessen. Das Verfahren ist bspw. beschrieben in DE 36 32 215 A1.

Weiter bevorzugt sind Nanopartikel, die auf der Oberfläche 0,01 bis 10 Methacrylgruppen/$nm^2$ und zusätzlich 0,01 bis 10 Vinyl- oder Allylgruppen/$nm^2$ tragen. Besonders bevorzugt sind Nanopartikel, die auf der Oberfläche 0,01 bis 6 Methacryloxypropylgruppen/$nm^2$ und weiter 0,01 bis 6 Vinylgruppen/$nm^2$ enthalten. Für eine Reihe von Anwendungen (siehe unten) ist es von Vorteil, wenn die Partikel auf der Oberfläche nur 0,01 bis 1 Methacryl- aber 1 bis 10 Vinylgruppen/$nm^2$ aufweisen.

Gegenstand der Erfindung ist ferner ein polymerisierbares Kompositmaterial (Polymerkomposit), das erfindungsgemäße Nanopartikel enthält. Das zur Herstellung eines solchen Kompositmaterials verwendete polymerisierbare Harz wird nachfolgend auch als Dispersionsmedium bezeichnet. Die oberflächenmodifizierten Nanopartikel werden darin dispergiert. Beim Aushärten des Harzes werden die Nanopartikel mittels der polymerisierbaren Gruppen an der Oberfläche in das sich bildende Netzwerk einpolymerisiert und können aufgrund der Mehrzahl von reaktionsfähigen Gruppen auf der Oberfläche eines Teilchens Vernetzungspunkte bilden. Dadurch, dass die Partikel im Harz (vorzugsweise ein (Meth)acrylat) dispergiert vorliegen, wird eine gleichmäßige Dispersion der Partikel bei der Polymerisation ermöglicht. Liegen die Partikel nicht im (Meth)acrylat dispergiert vor, kann es bei der Polymerisation zu Agglomeration oder zu einer heterogenen Verteilung der Partikel im Polymerisat kommen.

Bevorzugte Dispersionsmedien für die mit Gruppen vom Typ A und Typ B auf der Oberfläche modifizierten Partikel sind C1- C8- Ester der Acrylsäure. Auch C1- C8- Alkylester der Methacrylsäure lassen sich als Dispersionsmedien einsetzen.

Erfindungsgemäß ist es bevorzugt, dass die Nanopartikel zu wenigstens 50 Gew.-%, vorzugsweise wenigstens 70 Gew.-%, weiter vorzugsweise wenigstens 80 Gew.-% in Form vereinzelter, nicht aggregierter oder agglomerierter Primärpartikel vorliegen. Diese Gewichtsangaben beziehen sich auf das Gesamtgewicht der Nanopartikel in der Dispersion.

Eine erfindungsgemäße duale Oberflächenmodifizierung (d.h. Modifizierung mit 2 unterschiedlichen, radikalisch polymerisierbaren Gruppen) der $SiO_2$- Partikel hat den Vorteil, dass die $SiO_2$- Partikel in unterschiedlichen Stadien der Polymerisation in die Polymerketten eingebaut werden. So gewährleisten die Methacrylatgruppen auf der Partikeloberfläche, dass bereits in der Anfangsphase der Polymerisation die $SiO_2$-Partikel mit den Polymerketten verbunden werden und durch diese Anbindung eine gute Verteilung der Partikel in der Polymermatrix gewährleistet wird. Demgegenüber kommt die Wirkung der Vinylgruppen besonders bei hohen Umsätzen, also bei der Endpolymerisation, zur Geltung. Durch die duale Modifizierung wird somit das Geschehen am Anfang der Polymerisation mit dem Geschehen bei der Endpolymerisation verknüpft. Auf diesem Wege resultieren z.B. homogene, dehnbare Netzwerke.

Die besondere Bedeutung dieser Oberflächenmodifizierung mit zwei verschiedenen, radikalisch polymerisierbaren Gruppen ergibt sich durch das völlig unterschiedliche Copolymerisationsverhalten der Gruppen A und B mit den verschiedenen radikalisch polymerisierbaren Monomeren.

So werden bei der radikalischen Polymerisation einer Dispersion von Nanopartikeln mit Methacrylgruppen und Vinylgruppen auf der Oberfläche in Methylacrylat als Medium aufgrund der unterschiedlichen Copolymerisationsparameter der Paarungen:

Methylacrylat = M1/Methylmethacrylat = M2 mit rl=0,4 r2=2

Methylacrylat = M1/Vinylacetat = M2 mit r1=9 r2=0,05

Methylacrylat = M1/Ethylen = M2 mit r1=11 r2=0,2

die Methacrylgruppen der Partikeloberfläche bevorzugt in die Polymethylacrylatketten eingebaut, während die Vinylgruppen nur in geringem Umfang oder gar nicht copolymerisieren.

Hierbei wird davon ausgegangen, dass sich das Methacryloxypropyl der Partikeloberfläche wie ein Methacrylsäureester verhält und die z.B. über Vinyltrimethoxysilan eingebrachten Vinylgruppen wie gewöhnliche Vinylgruppen z.B. vom Typ Vinylacetat oder Ethylen copolymerisieren. Zum Thema Copolymerisations-parameter siehe J. Brandrup, E. H. Immergut, Polymerhandbook, 3ed. Edition, 1989, J. Wiley & sons, N.Y..

Ähnlich liegen die Copolymerisationsverhältnisse bei Polymerisation dieser Nanopartikel mit Methacryloxypropyl- und Vinylgruppen auf der Oberfläche in Methylmethacrylat als Dispersion. So hat man für das System MMA / Ethylen die Werte:
Methylmethacrylat = M1/Ethylen= M2 mit r1= 17 r2=0,2

Für die Copolymerisationsparameter der Methacryloxypropylgruppe mit MMA wird in Näherung ein Wert von ca. 1 angenommen, was den üblichen Copolymerisationsparametern verschiedener Methacrylester miteinander entspricht.

Damit findet man in MMA als Dispersionsmedium einen statistischen Einbau der Methacryloxypropylgruppen der Partikeloberfläche in die PMMA- Ketten und eine Diskriminierung der Vinylgruppen.

Die Synthese von Polymerkompositen aus den erfindungsgemäßen Nanopartikeln mit 2 unterschiedlichen, polymerisierbaren Gruppen auf der Partikeloberfläche ist nicht auf den Einsatz von (Meth)acrylsäureestern als Dispersionsmedium bzw. Harz beschränkt.

Vielmehr können auch andere, mit den reaktiven Gruppen auf der Oberfläche der erfindungsgemäßen Nanopartikel (bevorzugt (Meth)acrylsäureestern einerseits und Vinyl-, Allyl-, Hexenyl- und Crotonylgruppen andererseits) copolymerisierbare Monomere zum Einsatz kommen. Beispielhaft genannt seien (Meth)acrylsäuren, -amide und -nitrile, Styrol, Vinylester und Vinylamide.

Bevorzugt beträgt der Anteil dieser zusätzlichen Monomeren an der Gesamtrezeptur (Kompositmaterial) 0- 50 Gew.-%, bevorzugt 0- 20 Gew.-%.

Die Herstellung der erfindungsgemäßen Nanopartikel mit 2 verschiedenartigen, radikalisch polymerisierbaren Gruppen auf der Oberfläche erfolgt z.B. dergestalt, dass kolloidales Metall- oder Halbmetalloxid mit einer Mischung verschiedener Silane, z.B. Methacryloxypropyltrimethoxysilan und Vinyltrimethoxysilan umgesetzt wird.

Die Copolymerisation der polymerisierbaren Gruppen auf den Nanopartikeln mit den Monomeren des Dispersionsmediums kann entweder in Substanz oder in Gegenwart von Lösungsmitteln erfolgen. Desweiteren ist auch die Durchführung als Fällungspolymerisation möglich.

Dabei ergibt sich insbesondere bei Polymerisation in Lösungsmitteln die Möglichkeit, zunächst durch Zugabe eines ersten Monomers (Monomer 1) unter Reaktion mit z.B. den Methacryloxypropylgruppen der Partikeloberfläche, Polymer 1-gepfropfte Nanopartikel zu generieren, um anschließend durch Zugabe von eines zweiten Monomers (Monomer 2) über die auf der Partikeloberfläche verbliebenen, z.B. Vinylgruppen, Polymer 2 an die Nanopartikel zu knüpfen. Auf diesem Wege erhält man über Nanopartikel verknüpfte Polymer 1 / Polymer 2- Blockcopolymere.

Vorteile beim Einsatz der erfindungsgemäßen dual modifizierten Nanopartikel ergeben sich z.B. bei der Aushärtung von Methacrylatgießharzen. So bewirken die auf der Oberfläche der Nanopartikel vorhandenen Methacrylatgruppen eine frühe Anbindung der Nanopartikel an das entstehende Polymethacrylat und damit eine gute Verträglichkeit der Partikel mit der Methacrylatmatrix.

Demgegenüber greifen die Vinylgruppen der Partikeloberfläche bei der Endpolymerisation ins Geschehen ein. So zeigen reine Methacrylate aufgrund der steifen Polymethacrylatkette eine recht niedrige Ceilingtemperatur (z.B. ca. 160°C für PMMA).

Damit ist eine Endpolymerisation nur schlecht möglich. Es werden stets Methacrylatrestmonomere im Gleichgewicht übrig bleiben. Üblicherweise lässt sich dieser thermodynamisch vorgegebene Restgehalt an Methacrylgruppen durch Zugabe von Acrylsäureestern (Ceilingtemperatur fast 400°C) reduzieren. Aufgrund der ausgesprochenen Reizwirkung vieler Acrylatmonomerer ist der Einsatz dieser Monomeren gerade bei medizinischen Anwendungen begrenzt.

Hier schaffen die dual modifizierten Nanopartikel Abhilfe. Wie oben erläutert, bleiben bei einer Copolymerisation von MMA mit Vinylgruppen, die Vinylgruppen übrig, die Methacrylate werden bevorzugt in die Polymerketten eingebaut. Auf diesem Wege wird das verbliebene Restmonomere, z.B. MMA, durch Copolymerisation mit den auf den Nanopartikeln vorhandenen Vinylgruppen praktisch wegtitriert. Als Restmonomergruppen bleibt letztlich eine geringe Anzahl von Vinylgruppen auf der Partikeloberfläche. Diese sind jedoch aufgrund der guten Einbindung der Nanopartikel in die Polymermatrix nicht migrationsaktiv.

Wie im Folgenden am Beispiel der Acrylkautschuke exemplarisch gezeigt, sind die erfindungsgemäßen dual modifizierten Nanopartikel ganz allgemein als Vernetzer für Vinylpolymerisate einsetzbar. Dabei werden in einer 1. Reaktionsstufe die Nanopartikel über die (Meth)acryloxygruppe an die Polymeren gebunden, in einer 2. Stufe erfolgt die Vernetzung über die Vinyl-, Allyl-, Hexenyl- oder Crotonylgruppen.

Zur Herstellung von Acrylkautschuken werden die erfindungsgemäßen Nanopartikel in C1- C8- Alkyl(meth)acrylaten dispergiert. Bevorzugte Monomere sind Ethyl-, Butyl- und 2-Ethylhexylacrylat. In der Regel wird die Monomermischung so gewählt, dass ein Copolymeres mit einer Glasübergangstemperatur < 0°C, bevorzugt < -20°C, resultiert.

Die Glasübergangstemperatur eines Mischpolymerisates kann nach der sogenannten Fox-Gleichung berechnet werden (T.G. Fox, Bull. Am. Phys. Soc. (Ser. II), 1, 123 (1956)).

Bevorzugte Nanopartikel für die Synthese von Acrylkautschuk sind Partikel, die neben (Meth)acryl- auch Vinylgruppen auf der Partikeloberfläche enthalten. Besonders bevorzugt sind mit Methacryloxypropyl- und mit Vinylgruppen modifizierte $SiO_2$- Partikel.

Die Polymerisation der z.B. Methacryl- und Vinylgruppen tragenden Nanopartikel, dispergiert in z.B. Butylacrylat, nach dem Gießverfahren wird unter Einsatz thermisch zerfallender Initiatoren, Redoxinitiatoren, UV-Initiatoren oder mittels harter Strahlung durchgeführt. Im Falle der Polymerisation mittels thermisch wirksamer Initiatoren werden bevorzugt Initiatormischungen eingesetzt, wobei die eine Spezies bereits bei relativ niedrigen Temperaturen zerfällt unter Bildung relativ stabiler C- Radikale (z.B. t.- Amylperoxypivalat, Halbwertszeit 1h bei 71 °C), die andere erst bei höherer Temperatur unter Ausbildung pfropfakiver O- und C- Radikale (z.B. t.-Butylperoxybenzoat, Halbwertszeit 1h bei 124 °C).

Durch die frühe Anbindung der Nanopartikel (über die Methacryloxypropylgruppe) an das sich bildende Polybutylacrylat und die Einbeziehung der Nanopartikel über die Vinylgruppen in das Geschehen der Endpolymerisation entstehen mechanisch und optisch hochwertige Acrylkautschuke. Die Härte dieser Kautschuke kann dabei z.B. über den Gehalt an Nanopartikeln und die Glastemperatur eingestellt werden. Im Allgemeinen liegt der Gehalt an Nanopartikeln in dieser Anwendung im Bereich 5- 70 Gew.-%, bevorzugt 10- 50 Gew.-%.

Es hat sich gezeigt, dass die Herstellung von Acrylkautschuken mit Hilfe der dual modifizierten Nanopartikel auch gut als Zwei- Stufen- Prozess durchgeführt werden kann. Dabei werden in einer 1. Stufe Nanopartikel mit (Meth)acrylgruppen und Gruppen vom Typ Vinyl-, Allyl-, Alkenyl- oder Crotonyl, dispergiert in z.B. Butylacrylat, gegebenenfalls in Gegenwart von inerten Lösungsmitteln, z.B. Butylacetat, mit Hilfe eines Initiators, z.B. AIBN, der unter Ausbildung stabiler, wenig pfropfaktiver Radikale zerfällt, zu einem Umsatz von ca. 90 % polymerisiert. Anschließend wird das Lösungsmittel und noch vorhandenes Butylacrylat entfernt.

Der auf diesem Wege anfallende, Nanopartikel enthaltende, viskose Flüssigkautschuk wird nach Zusatz von pfropfaktiven, thermisch zerfallenden Initiatoren oder UV- Initiatoren in eine entsprechende Form gefüllt und unter Einwirkung von Hitze, Licht oder ohne Zusatz direkt mittels harter Strahlung vulkanisiert.

Diese Vulkanisation des Nanopartikel enthaltenden Flüssigkautschuks kann als Peroxidhärtung gesehen werden, wobei die Vinylgruppen der Nanopartikel als Comonomere die Vernetzungswirkung verstärken (siehe Abb. 1). Bevorzugte Monomere für diese zweistufige Herstellung von Acrylatkautschuk sind Butylacrylat und 2-Ethylhexylacrylat.

Diese Form der Synthese von Acrylatkautschuk über Polybutylacrylat mit über Methacrylatgruppen fixierten, Vinylgruppen enthaltenden Nanopartikeln ist nahezu schrumpffrei, geruchslos und emissionsfrei. Bei diesem Verfahren kann die Härte über den Gehalt an Nanopartikeln, die Menge der polymerisierbaren Gruppen auf der Partikeloberfläche und die Menge des eingesetzten Peroxids eingestellt werden.

Bei diesem Flüssigkautschukverfahren sind Nanopartikel bevorzugt, die einen relativ geringen Gehalt an (Meth)acrylgruppen, z.B. 0,01- 1 Gruppen/ nm2 enthalten und zugleich einen relativ hohen Gehalt an Vinylgruppen, z.B. 2- 10 Vinylgruppe/ nm2.

Neben dieser reinen Flüssigkautschuksynthese ohne jeglichen Zusatz flüchtiger Bestandteile bei der Härtung ist es auch möglich, in einem Zweistufen- Verfahren so zu verfahren, dass in einer 1. Stufe die dual modifizierten Nanopartikel in Butylacrylat und einem Lösungsmittel polymerisiert werden, darauf das Lösungsmittel abgezogen und durch andere Monomere, z.B. MMA oder Styrol ersetzt wird.

So wird z.B. in der 2. Stufe eine Mischung aus 80 Teilen Polybutylacrylat der 1. Stufe (enthaltend z.B: 20 Gew.-% dual modifizierter Nanopartikel) und 20 Teilen Styrol mit Peroxid versetzt, in eine Form gefüllt und polymerisiert.

In diesem Falle resultiert ein Acrylkautschuk, der über Nanopartikel und Polystyroldomänen vernetzt ist. Im Falle von Styrol als Comonomeren sind Allylgruppen als polymerisierbare Gruppen B auf der Partikeloberfläche von Interesse.

Die Metalloxidpartikel weisen bevorzugt eine Oberflächenmodifikation zur Funktionalisierung und ggf. zur Kompatibilisierung mit den Monomeren auf. Bekannte und der Fachwelt geläufige Methoden zur Oberflächenfunktionalisierung sind beispielsweise die Silanisierung der Oberfläche, die Umsetzung mit Titanaten und Zirconaten, die Alkoholyse, die Verwendung saurer, basischer oder ionischer Verbindungen, die mit der polaren Oberfläche ionische Bindungen eingehen, die radikalische Anbindung von Polymeren und Monomeren, sowie die lediglich physikalische Anhaftung von hydrophoben Polymeren.

Oxide mit saurer Oberfläche, wie z.B. Siliciumdioxid, können mit basischen Molekülen ionische Bindungen eingehen. Dazu zählen bevorzugt Stickstoffverbindungen. Diese Stickstoffverbindungen können weitere polymerisierbare Gruppen tragen. Beispiele hierfür sind das Vinylpyridin, Vinylpyrrolidon und das Allylamin. Oxide mit basischer Oberfläche wie Aluminiumoxid und Zinkoxid können mit organischen Säuren reagieren und eine ionische Bindung eingehen. Beispiele hierfür sind Ölsäure, Acrylsäure und Methacrylsäure.

Die Silanisierung der Oberfläche der $SiO_2$-Teilchen geschieht bevorzugt mit Organosilanen oder Organosiloxanen. Diese Silanisierung ist eine in der Fachwelt geläufige Technologie.

Die Organosilane oder Organosiloxane sind bevorzugt ausgewählt aus der Gruppe der bestehend aus Organosilanen der Formel $R^1_aSiX_{4-a}$, Organosilanen der Formel $(R^1_3Si)_bNR^1_{3-b}$ und Organosiloxanen der Formel $R^1_nSiO_{(4-n)/2}$, worin jedes $R^1$ unabhängig voneinander ausgewählt ist aus Kohlenwasserstoffresten mit 1 bis 18 Kohlenstoffatomen oder organofunktionellen Kohlenwasserstoffresten mit 1 bis 18 Kohlenstoffatomen oder ein Wasserstoffatom ist, jedes X unabhängig voneinander auswählt eine hydrolysierbare Gruppe ist, a = 0, 1, 2 oder 3, b = 1, 2 oder 3 und n eine Zahl von 2 bis einschließlich 3 ist. Beispiele für hydrolysierbare Gruppen sind Halogen-, Alkoxy-, Alkenoxy-, Acyloxy-, Oximino- und Aminoxygruppen. Bei den organofunktionellen Kohlenwasserstoffresten sind insbesondere ungesättigte Reste bevorzugt, die reaktiv in einer radikalischen Polymerisation sind. Beispiel für solche organischen Reste sind solche die Methacryloyl, Acryloyl-, Styryl-, Vinyl-, Hexenyl- und Allyl-Funktionalitäten bzw. Gruppen aufweisen.

Zur Funktionalisierung der Partikel mit reaktiven Gruppen kommen beispielsweise Vinyltrimethoxysilan, Vinyltriethoxysilan, Methylvinyldimethoxysilan, Methylvinyldiethoxysilan, Vinyldimethylmethoxysilan, Vinyldimethylethoxysilan, Divinyldimethoxysilan, Divinyldiethoxysilan, Vinyltriacetoxysilan, Vinyltrichlorsilan, Methylvinyldichlorsilan, Dimethylvinylchlorsilan, Divinyldichlorsilan, Vinyltris(2-methoxyethoxy)silan, Hexenyltrimethoxysilan, Gamma-Methacryloxypropyltrimethoxysilan, Gamma-Methacryloxypropyltriethoxysilan, Gamma-Methacryloxypropyltriacetoxysilan, Methacryloxymethyltrimethoxysilan, Methacryloxymethyltriethoxysilan, (Methacryloxymethyl)methyldimethoxysilan, (Methacryloxymethyl)-methyldiethoxysilan, Acryloxypropyltrimethoxysilan, Acryloxypropyltriethoxysilan, Gamma-Methacryloxypropyltrichlorsilan, Gamma-Methacryloxypropyldimethylchlorsilan, Vinylbenzylethylendiaminpropyltrimethoxysilan, Vinylbenzylethylendiaminpropyltrimethoxysilan-Hydrochlorid, Allylethylendiaminpropyltrimethoxysilan, Allylethylendiaminpropyltriethoxysilan, Allyltrichlorsilan, Allylmethyldichlorsilan, Allyldimethylchlorsilan, Allyltrimethoxysilan, Allyltriethoxysilan, Allylmethyldimethoxysilan, Allylmethyldiethoxysilan, Allyldimethylmethoxysilan, Allyldimethylethoxysilan, Divinyltetramethyldisilazan, Divinyltetramethyldisiloxan, Trimethyltrivinylcyclotrisiloxan, Tetramethyltetravinylcyclotetrasiloxan, Pentamethylpentavinylcyclopentasiloxan und Hexamethylhexavinylcyclohexasiloxan in Frage. Es können Mischungen dieser Silane untereinander oder mit unfunktionalisierten Silanen wie z.B. Chlortrimethylsilan oder Octyltrimethoxysilan eingesetzt werden. Die Silanisierung kann auch in mehreren Schritten und unterschiedlichen Lösungsmitteln durchgeführt werden.

Bei einer alternativen Methode zur Oberflächenmodifizierung können die $SiO_2$-Partikel mit Alkoholen, Polyolen oder Mischungen daraus behandelt werden. Durch die Behandlung binden Silanolgruppen auf der Oberfläche des $SiO_2$-Partikels chemisch mit den Hydroxygruppen des Alkohols, so dass an der Oberfläche gebundene Estergruppen entstehen. Diese Technik ist beschrieben bspw. in US-A-2801185. Im Sinne dieser Erfindung ist es bevorzugt zumindest teilweise ungesättigte primäre Alkohole einzusetzen. Beispiele für solche Alkohole sind Hydroxyethylacrylat, Hydroxyethylmethacrylat, und Allylalkohol.

Eine weitere Methode zur Funktionalisierung ist das Modifizieren der Oberfläche mit Ankergruppen, z.B. funktionalisierten Silanen. Diese Silan verfügen über eine reaktive Gruppe, die in einem zweiten Schritt mit einem Molekül reagieren kann, das selbst über zwei reaktive Gruppen verfügt. Die eine Gruppe reagiert mit dem Silan, die andere ist in der radikalischen Polymerisation reaktiv.

Beispiel 1 Herstellung von Nanopartikeldispersionen

P1

Ein kolloidales Kieselsol (40 Gew.-% $SiO_2$ in Wasser, Teilchengröße (D50) per dynamischer Lichtstreuung: 25 nm, stabilisiert mit NaOH) wurde über einem sauren Ionentauscher (Amberjet 1200H, Rohm&Haas) gerührt, bis ein pH-Wert von 2-3 erreicht war. Nach der Filtration vom Ionentauscher wurden 2000 g des sauren Sols mit 59,6 g MEMO und 35,6 g Vinyltrimethoxysilan 2 h lang gerührt.

Das Sol wurde mit 2800 g Isopropanol verdünnt, so dass man ein Sol mit einem Feststoffgehalt von 17 Gew.-% in einem Gemisch aus Isopropanol und Wasser im Verhältnis 70 : 30 erhält. Die Partikel weisen 1,6 Vinylgruppen pro $nm^2$ (aus Vinyltrimethoxysilan) und 1,6 Methacrylgruppen pro $nm^2$ (aus Gamma-Methacryloxypropyltrimethoxysilan) auf der Oberfläche auf.

P2

Ein kolloidales Kieselsol (40 Gew.-% $SiO_2$ in Wasser, Teilchengröße (D50) per dynamischer Lichtstreuung: 25 nm, stabilisiert mit NaOH) wurde über einem sauren Ionentauscher (Amberjet 1200H, Rohm&Haas) gerührt, bis ein pH-Wert von 2-3 erreicht war. Nach der Filtration vom Ionentauscher wurden 400 g des sauren Sols mit 11,9 g MEMO und 7,1 g Vinyltrimethoxysilan 2 h gerührt. Die Mischung wurde mit 2400 g Isopropanol versetzt und unter Vakuum destillativ auf ca. 450 g eingeengt.

Zu der Mischung wurden 1600 g stabilisiertes Butylacrylat (mit Methoxyhydrochinon stabilisiert) gegeben und unter reduziertem Druck destilliert, bis das Isopropanol entfernt war. Es wurde eine Dispersion mit einem Feststoffgehalt von 33,4 Gew.-% erhalten. Die Partikel weisen 1,6 mmol Vinylgruppen / $nm^2$ (aus Vinyltrimethoxysilan) und 1,6 mmol / $nm^2$ Methacrylgruppen (aus Gamma-Methacryloxypropyltrimethoxysilan) auf der Oberfläche auf.

Beispiel 2 Acrylkautschukplatte auf der Basis der Nanopartikeldispersion P2

Eine Mischung aus

    0,07 g Didodecanoylperoxid
    0,11 g Benzoylperoxid (mit 25 Gew.-% Wasser)
    2 g Butylacrylat und
    48 g P2

wird entgast (ca. 20 mbar) und bei Raumtemperatur in eine Polymerisationskammer gefüllt. Außenmasse der Polymerisationskammer: 150 x 200 mm. Aufbau der Kammer: Glasplatte / Distanzschnur (3 mm) / Glasplatte.

Anschließend wird im Wasserbad zunächst 3 h bei 70 °C und darauf 2 h bei 85 °C polymerisiert. Zur Endpolymerisation wird 2 h bei 110 °C im Wärmeschrank getempert.

Man erhält eine farblose, transparente Acrylkautschukplatte.

Beispiel 3 Acrylkautschukplatte auf der Basis von Partikeldispersion P2 mit verringertem Gehalt an Nanopartikeln

Man wiederholt den Polymerisationsversuch gemäß Beispiel 2, wählt jedoch eine andere Zusammensetzung:
Einwaagen:

    0,05 g Didodecanoylperoxid
    0,10 g t.-Butylperbenzoat
    10 g Butylacrylat
    40 g P2

Nach Polymerisation und anschließendem Tempern (2 h bei 130 °C) erhält man eine klare, weiche Kautschukplatte mit schwachem Gelbstich.

Beispiel 4 Acrylkautschukplatte auf Basis der Partikeldispersion P2 mit weiter verringertem Gehalt an Nanopartikeln

Man wiederholt den Versuch gemäß Beispiel 2, wählt jedoch eine andere Zusammensetzung: Einwaagen:

0,05 g Didodecanoylperoxid
0,10 g Dibenzoylperoxid
20 g Butylacrylat
30 g P2

Man erhält eine klare, farblose Kautschukplatte.
Beispiel 5 Synthese eines Butylacrylatkautschuks nach einem 2- Stufen- Verfahren
Eine Mischung aus 13,7 g P2, 4,2 g Butylacrylat, 72,7 g Butylacetat und 0,025 g AIBN wird unter Argon als Schutzgas bei 83 °C unter Rühren 30min polymerisiert. Man erhält eine dünnflüssige, transparente Lösung, Feststoffgehalt: 15 %.
Nach Abziehen der flüchtigen Bestandteile resultiert eine glasklare, farblose, verformbare Masse.

Vernetzungsversuch:

15 g der Lösung werden mit 2 Gew.-% Dibenzoylperoxid bezogen auf den Feststoff versetzt und in eine Glasschale gegeben. Nach Trocknung wird 2 h auf 140 °C erwärmt.
Man erhält einen glasklaren, leicht gelb gefärbten Gummi, der die Glasschale abformt.
Beispiel 6 Verwendung der dual modifizierten Nanopartikel zur Herstellung von Polybutylacrylat / Polyvinylpyrrolidon-Pfropfcopolymeren
In einer Rührapparatur wird unter Argon als Schutzgas eine Mischung aus 43,5 g P1, 34,3 g Isopropanol, 7,5 g Butylacrylat und 0,12 g AIBN vorgelegt und auf 75 °C erwärmt (Innentemperatur). Nach Erreichen der Innentemperatur wird 10min gehalten. Anschließend werden innerhalb von 30 min 12 g N-Vinylpyrrolidon zugetropft und danach weitere 30 min bei 75 °C gerührt.
Nach Abkühlen auf Raumtemperatur resultiert eine stabile, dünnflüssige, transparente Dispersion mit einem Feststoffgehalt von 27,7 Gew.-%.

**Patentansprüche**

1. Metall- oder Halbmetalloxidnanopartikel mit einer mittleren Teilchengröße als Median D50 von 2 bis 250 nm, gemessen mittels dynamischer Lichtstreuung auf einem Partikelanalysator LB-550 bei einer Konzentration von maximal 10 Gew.-% Partikeln, wobei die Dispersion maximal eine dynamische Viskosität von 3 mPas bei 25°C aufweist, **dadurch gekennzeichnet, dass** die Nanopartikel wenigstens zwei verschiedenartige, radikalisch polymerisierbare Gruppen auf der Oberfläche aufweisen, wobei die wenigstens 2 verschiedenartigen, radikalisch polymerisierbaren Gruppen ausgewählt sind aus Methacryl-, Acryl-, Styryl- oder Itaconylgruppen einerseits und Vinyl-, Allyl-, Alkenyl- oder Crotonylgruppen andererseits.

2. Nanopartikel nach Anspruch 1, **dadurch gekennzeichnet, dass** die mittlere Teilchengröße wenigstens 4 nm, vorzugsweise wenigstens 5 nm, weiter vorzugsweise wenigstens 8 nm beträgt; und dass vorzugsweise die mittlere Teilchengröße höchstens 150 nm, weiter vorzugsweise höchstens 20 nm, weiter vorzugsweise höchstens 30 nm beträgt.

3. Nanopartikel nach Anspruch 1 oder 2, **dadurch gekennzeichnet, dass** die Partikel ausgewählt sind aus der Gruppe bestehend aus Metalloxiden der 3. und 4. Hauptgruppe, Übergangsmetalloxiden, Oxiden der Lanthanoiden und Actiniden; wobei die Nanopartikel vorzugsweise $SiO_2$-Nanopartikel sind.

4. Nanopartikel nach einem der Ansprüche 1 bis 3, **dadurch gekennzeichnet, dass** die wenigstens 2 verschiedenartigen, radikalisch polymerisierbaren Gruppen ausgewählt sind aus Methacryl-, Acryl-, Styryl- oder Itaconylgruppen einerseits und Vinyl-, Allyl-, Alkenyl- oder Crotonylgruppen andererseits, wobei die Konzentration jeder der Gruppen auf der Oberfläche der Nanopartikel 0,01 - 10 Gruppen pro $nm^2$, vorzugsweise 0,1 bis 4 Gruppen pro $nm^2$, weiter vorzugsweise 0,1 bis 1 Gruppen pro $nm^2$ beträgt, gemessen mittels NMR Spektroskopie oder mittels DSC.

5. Nanopartikel nach einem der Ansprüche 1 bis 4, **dadurch gekennzeichnet, dass** die Partikel zusätzlich nicht polymerisierbare, hydrophobierende Gruppen enthalten.

6. Nanopartikel nach einem der Ansprüche 1 bis 5, **dadurch gekennzeichnet, dass** die Partikel auf der Oberfläche 0,01 bis 6 Methacryloxy- und 0,01 bis 6 Vinylgruppen / $nm^2$ enthalten, gemessen mittels NMR Spektroskopie oder mittels DSC.

7. Härtbares Nanokompositmaterial, **dadurch gekennzeichnet, dass** wenigstens ein härtbares Harz und darin dispergiert Nanopartikel nach einem der Ansprüche 1 bis 6 enthält; wobei es vorzugsweise C1- C8- Alkylester der Acrylsäure und/oder Methacrylsäure enthält.

8. Nanokompositmaterial nach Anspruch 7, **dadurch gekennzeichnet, dass** die Nanopartikel zu wenigstens 50 Gew.-%, vorzugsweise wenigstens 70 Gew.-%, weiter vorzugsweise wenigstens 80 Gew.-%, weiter vorzugsweise wenigstens 90 Gew.-% in Form vereinzelter, nicht aggregierter oder agglomerierter Primärpartikel vorliegen.

9. Verfahren zur Herstellung von Nanopartikeln gemäß einem der Ansprüche 1 bis 6, **dadurch gekennzeichnet, dass** eine kolloidale Lösung bzw. Dispersion eines Metall- oder Halbmetalloxid mit einer Mischung oder in mehreren Stufen mit wenigstens zwei Silanen umgesetzt wird.

10. Verfahren nach Anspruch 9, **dadurch gekennzeichnet, dass** die Silane Methacryloxypropyltrimethoxysilan und Vinyltrimethoxysilan umfassen.

11. Verfahren zur Herstellung eines ausgehärteten Nanokompositmaterials, **dadurch gekennzeichnet, dass** ein härtbares Nanokompositmaterial nach einem der Ansprüche 7 oder 8 unter Zusatz von radikalisch wirksamen Initiatoren und/oder durch energiereiche Strahlung polymerisiert wird.

12. Verfahren nach Anspruch 11, **dadurch gekennzeichnet, dass** es in wenigstens zwei Polymerisationsstufen durchgeführt wird.

13. Verfahren nach Anspruch 12, **dadurch gekennzeichnet, dass** es in der ersten Stufe in Gegenwart von wenigstens 10 Gew.-% Lösungsmitteln bezogen auf den Gesamtansatz und in der 2. Stufe in Gegenwart von höchstens 5 Gew.-% Lösungsmittel bezogen auf den Gesamtansatz durchgeführt wird.

14. Verfahren nach Anspruch 12 oder 13, **dadurch gekennzeichnet, dass** in der zweiten Polymerisationsstufe von den Monomeren der ersten Polymerisationsstufe verschiedene Monomere zum Einsatz kommen.

15. Verfahren zur Herstellung eines Acrylatkautschuks, **dadurch gekennzeichnet, dass** ein durch ein Verfahren nach einem der Ansprüche 12 bis 14 hergestellter Flüssigkautschuk durch Einwirkung von harter Strahlung, durch Licht (bei Anwesenheit von UV-Initiatoren) oder mittels Einsatz von Peroxiden vulkanisiert wird.

**Claims**

1. Metal oxide or semimetal oxide nanoparticles having an average particle size as median D50 of from 2 to 250 nm, measured by means of dynamic light scattering on a particle analyzer LB-550 at a concentration of not more than 10% by weight of particles, with the dispersion having a maximum dynamic viscosity of 3 mPas at 25°C, **characterized in that** the nanoparticles have at least two different, free-radically polymerizable groups on the surface, with the at least 2 different, free-radically polymerizable groups being selected from among firstly methacryl, acryl, styryl and itaconyl groups and secondly vinyl, allyl, alkenyl and crotonyl groups.

2. Nanoparticles according to Claim 1, **characterized in that** the average particle size is at least 4 nm, preferably at least 5 nm, more preferably at least 8 nm; and **in that** the average particle size is preferably not more than 150 nm, more preferably not more than 20 nm, more preferably not more than 30 nm.

3. Nanoparticles according to Claim 1 or 2, **characterized in that** the particles are selected from the group consisting of metal oxides of main groups 3 and 4, transition metal oxides, oxides of the lanthanides and actinides; with the nanoparticles preferably being $SiO_2$ nanoparticles.

4. Nanoparticles according to any of Claims 1 to 3, **characterized in that** the at least 2 different, free-radically polymerizable groups are selected from among firstly methacryl, acryl, styryl and itaconyl groups and secondly vinyl, allyl, alkenyl and crotonyl groups, with the concentration of each of the groups on the surface of the nanoparticles preferably being 0.01 - 10 groups per $nm^2$, preferably from 0.1 to 4 groups per $nm^2$, more preferably from 0.1 to 1 group per $nm^2$, measured by means of NMR spectroscopy or by means of DSC.

5. Nanoparticles according to any of Claims 1 to 4, **characterized in that** the particles additionally contain nonpolymerizable, hydrophobicizing groups.

6. Nanoparticles according to any of Claims 1 to 5, **characterized in that** the particles contain from 0.01 to 6 methacryloxy groups and from 0.01 to 6 vinyl groups / $nm^2$ on the surface, measured by means of NMR spectroscopy or by means of DSC.

7. Curable nanocomposite, **characterized in that** it contains at least one curable resin and nanoparticles according to any of Claims 1 to 6 dispersed therein and preferably contains C1-C8-alkyl esters of acrylic acid and/or methacrylic acid.

8. Nanocomposite according to Claim 7, **characterized in that** at least 50% by weight, preferably at least 70% by weight, more preferably at least 80% by weight, more preferably at least 90% by weight, of the nanoparticles are present in the form of individual, unaggregated or unagglomerated primary particles.

**9.** Process for producing nanoparticles according to any of Claims 1 to 6, **characterized in that** a colloidal solution or dispersion of a metal oxide or semimetal oxide is reacted with a mixture or in a plurality of stages with at least two silanes.

**10.** Process according to Claim 9, **characterized in that** the silanes comprise methacryloxypropyltrimethoxysilane and vinyltrimethoxysilane.

**11.** Process for producing a cured nanocomposite, **characterized in that** a curable nanocomposite according to either Claim 7 or 8 is polymerized with addition of free-radically active initiators and/or by means of energy-rich radiation.

**12.** Process according to Claim 11, **characterized in that** it is carried out in at least two polymerization stages.

**13.** Process according to Claim 12, **characterized in that** the first stage is carried out in the presence of at least 10% by weight of solvents based on the total batch and the 2nd stage is carried out in the presence of not more than 5% by weight of solvents based on the total batch.

**14.** Process according to Claim 12 or 13, **characterized in that** the second polymerization stage is carried out using monomers different from the monomers of the first polymerization stage.

**15.** Process for producing an acrylate rubber, **characterized in that** a liquid rubber produced by a process according to any of Claims 12 to 14 is vulcanized by action of hard radiation, by means of light (in the presence of UV initiators) or by use of peroxides.

**Revendications**

**1.** Nanoparticules d'oxyde métallique ou semi-métallique présentant une grosseur moyenne de particule, comme médiane $D_{50}$, de 2 à 250 nm, mesurée par dispersion dynamique de la lumière sur un analyseur de particules LB-550 à une concentration de maximum 10% en poids de particules, la dispersion présentant au maximum une viscosité dynamique de 3 mPa.s à 25°C, **caractérisées en ce que** les nanoparticules présentent au moins deux groupes polymérisables par voie radicalaire, différents, sur la surface, lesdits au moins 2 groupes polymérisables par voie radicalaire, différents, étant choisis parmi les groupes méthacryle, acryle, styryle ou itaconyle d'une part et les groupes vinyle, allyle, alcényle ou crotonyle d'autre part.

**2.** Nanoparticules selon la revendication 1, **caractéri-**

**sées en ce que** la grosseur moyenne de particule est d'au moins 4 nm, de préférence d'au moins 5 nm, plus préférablement d'au moins 8 nm ; et **en ce que** de préférence la grosseur moyenne de particule est d'au plus 150 nm, plus préférablement d'au plus 20 nm, encore plus préférablement d'au plus 30 nm.

**3.** Nanoparticules selon la revendication 1 ou 2, **caractérisées en ce que** les particules sont choisies dans le groupe constitué par les oxydes métalliques du 3ème et du 4ème groupe principal, les oxydes de métal de transition, les oxydes des lanthanides et des actinides ; les nanoparticules étant de préférence des nanoparticules de $SiO_2$.

**4.** Nanoparticules selon l'une quelconque des revendications 1 à 3, **caractérisées en ce que** les nanoparticules présentent au moins deux groupes polymérisables par voie radicalaire, différents, sur la surface, lesdits au moins 2 groupes polymérisables par voie radicalaire, différents, étant choisis parmi les groupes méthacryle, acryle, styryle ou itaconyle d'une part et les groupes vinyle, allyle, alcényle ou crotonyle d'autre part, la concentration en chacun des groupes sur la surface des nanoparticules étant de 0,01-10 groupes par $nm^2$, de préférence de 0,1 à 4 groupes par $nm^2$, plus préférablement de 0,1 à 1 groupe par $nm^2$, mesurée par spectroscopie RMN ou par DSC.

**5.** Nanoparticules selon l'une quelconque des revendications 1 à 4, **caractérisées en ce que** les particules contiennent en outre des groupes d'hydrofugation non polymérisables.

**6.** Nanoparticules selon l'une quelconque des revendications 1 à 5, **caractérisées en ce que** les particules sur la surface contiennent 0,01 à 6 groupes méthacryloxy et 0,01 à 6 groupes vinyle/$nm^2$, mesurés par spectroscopie RMN ou par DSC.

**7.** Matériau nanocomposite durcissable, **caractérisé en ce qu'**il contient au moins une résine durcissable et, dispersées dans celle-ci, des nanoparticules selon au moins l'une quelconque des revendications 1 à 6 ; contenant de préférence des esters $C_1$-$C_8$-alkyliques de l'acide acrylique et/ou méthacrylique.

**8.** Matériau nanocomposite selon la revendication 7, **caractérisé en ce que** les nanoparticules se trouvent à raison d'au moins 50% en poids, de préférence d'au moins 70% en poids, plus préférablement d'au moins 80% en poids, plus préférablement d'au moins 90% en poids, sous forme de particules primaires individuelles, non agrégées ou sous forme de particules agglomérées.

**9.** Procédé pour la préparation de nanoparticules selon l'une quelconque des revendications 1 à 6, **caractérisé en ce qu'**une solution ou une dispersion colloïdale d'un oxyde métallique ou semi-métallique est transformée avec un mélange d'au moins deux silanes ou en plusieurs étapes avec au moins de silane.

10. Procédé selon la revendication 9, **caractérisé en ce que** les silanes comprennent du méthacryloxypropyltriméthoxysilane et du vinyltriméthoxysilane.

11. Procédé pour la préparation d'un matériau nanocomposite durci, **caractérisé en ce qu'**un matériau nanocomposite durcissable selon l'une quelconque des revendications 7 au 8 est polymérisé avec addition d'initiateurs actifs d'un point de vue radicalaire et/ou par un rayonnement riche en énergie.

12. Procédé selon la revendication 11, **caractérisé en ce qu'**il est réalisé en au moins deux étages de polymérisation.

13. Procédé selon la revendication 12, **caractérisé en ce qu'**il est réalisé, dans le premier étage, en présence d'au moins 10% en poids de solvants par rapport à la charge totale et, dans le 2ème étage, en présence d'au plus 5% en poids de solvant par rapport à la charge totale

14. Procédé selon la revendication 12 ou 13, **caractérisé en ce qu'**on utilise, dans le deuxième étage de polymérisation, des monomères différents des monomères du premier étage de polymérisation.

15. Procédé pour la préparation d'un caoutchouc d'acrylate , **caractérisé en ce qu'**un caoutchouc liquide préparé par un procédé selon l'une quelconque des revendications 12 à 14 est vulcanisé par l'action d'un rayonnement dur, par la lumière (en présence d'initiateurs UV) ou par l'utilisation de peroxydes.

EP 2 265 676 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69826226
- DE 10100633
- DE 19925331
- DE 10259460
- DE 3632215 A1
- US 2801185 A

**In der Beschreibung aufgeführte Nicht-Patentliteratur**

- **PEYRELASSE et al.** *Langmuir,* 2006, vol. 22, 6683
- **VON MAUGER et al.** *Polym Int,* 2004, vol. 53, 378
- **J. BRANDRUP ; E. H. IMMERGUT.** Polymerhandbook. J. Wiley & sons, 1989
- **T.G. FOX.** *Bull. Am. Phys. Soc.,* 1956, vol. 1, 123